Europäisches Patentamt

European Patent Office

Office européen des brevets

(19)

(11) **EP 1 059 607 A1**

(12) **DEMANDE DE BREVET EUROPEEN**

(43) Date de publication:
**13.12.2000 Bulletin 2000/50**

(51) Int Cl.⁷: **G06T 5/00**

(21) Numéro de dépôt: **00401469.2**

(22) Date de dépôt: **25.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **07.06.1999 FR 9907146**

(71) Demandeur: **ALCATEL**
**75008 Paris (FR)**

(72) Inventeurs:
• **Lechervy, Yves**
**91000 Evry (FR)**

• **Louis, Christian**
**Les Tamaris, 91400 Orsay (FR)**
• **Barlaud, Michel**
**06560 Valbonne (FR)**
• **Amadieu, Olivier**
**06600 Antibes (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Procédé d'extraction d'empreintes au sol d'objets dans un modèle numérique d'élévation à l'aide de contours actifs non paramétriques**

(57) Le procédé conforme à l'invention comporte les étapes consistant à :

• faire évoluer un ensemble de contours actifs obéissant à une loi d'évolution,
• stopper l'évolution des contours actifs lorsqu'ils remplissent une première condition d'arrêt afin de déterminer des premières positions,
• faire de nouveau évoluer ledit ensemble de contours actifs selon la loi d'évolution,
• stopper l'évolution desdits contours actifs lorsque ceux-ci remplissent une seconde condition d'arrêt, afin de déterminer des secondes positions.

Les empreintes au sol sont alors déterminées par ces premières et secondes positions.

FIG_1

## Description

La présente invention concerne un procédé de détection et de modélisation de constructions humaines à partir d'un modèle numérique d'élévation. L'invention s'applique particulièrement à la modélisation de structures humaines telles des bâtiments dans de tels modèles numériques d'élévation.

Un modèle numérique d'élévation est une structure de données ayant la forme d'un tableau donnant en regard de deux coordonnées l'altitude du point de terrain correspondant à ces deux coordonnées. Il s'agit donc d'une discrétisation du terrain dont la précision dépend fortement de la technologie adoptée pour construire le modèle d'élévation.

L'état de l'art dans le domaine de la détection et de la modélisation de structures humaines est essentiellement basé sur des techniques de recherches de primitives. On peut consulter sur ce sujet l'article de Yves Léchervy, Christian Louis et Olivier Monga intitulé "*Crestlines contribution to the automatic building extraction*" dans l'ouvrage *Automatic Extraction of Man-Made Objects from Aerial and Space Images (II), Monte Verità, 1997*, aux éditions Birkhäuser Verlag, ETH Zürich.

Ces techniques se basent en premier lieu sur des méthodes de calcul de gradient. On peut citer à titre d'exemple d'une telle méthode, la méthode dite de Canny ou de Canny-Deriche. Cette méthode est par exemple présentée dans l'article de J. F. Canny intitulé "*A Computational Approach to Edge Detection*", IEEE transactions on Patterns Analysis and Machine Intelligence, novembre 1987.

À partir du gradient ainsi calculé, on procède généralement à une étape de chaînage des données, afin d'obtenir une représentation vectorielle des objets ainsi détectés. Ensuite, on met en oeuvre une étape de comparaison (ou *matching*, en anglais) entre ces objets et un ensemble d'objets contenus dans une bibliothèque de référence et qui sont autant de modèles d'objets que l'on cherche à détecter puis modéliser.

Néanmoins, une telle approche comporte une limitation majeure puisqu'elle suppose une connaissance a priori des objets que l'on cherche à détecter. Or du fait de l'extrême variété des différentes structures humaines que l'on peut avoir à détecter, cette limitation est extrêmement pénalisante.

L'article « *Geodesic Active Contours* » de Vincent Caselles, Ron Kimmel et Guillermo Sapiro, paru dans les « *Proceedings of the* International *Conference on Computer Vision* », Los Alamitos, 20 juin 1995, présente un procédé d'extraction de contours dans une image numérique basé sur la notion de contours actifs, et plus précisément de contours actifs géodésiques que l'on fait évoluer par une méthode de propagation dite "de courbes de niveaux" (ou "*level-set method*" en anglais). Les contours actifs géodésiques sont par exemple décrit dans l'ouvrage intitulé "*Level Sets Methods*" de J. A. Sethian, paru aux éditions *Cambridge University Press,* en 1996.

D'une façon très générale, la méthode des courbes de niveaux consiste à considérer une courbe évoluant avec le temps dont l'évolution est déterminée par une équation de la forme :

$$\frac{\partial u}{\partial t} = c \cdot |\nabla u|,$$

avec u qui représente la carte des distances associée à cette courbe, t qui représente le temps (ou les itérations dans le cas d'un système à temps discret), $\nabla u$ qui représente le gradient de la carte de distance (et $|\nabla u|$ est son module), et c qui est un paramètre appelé vitesse.

La carte de distances d'une courbe associe à chaque point de l'espace la distance qui le sépare de cette courbe. Cette distance est signée, de sorte que l'on peut caractériser la courbe comme le lieu des points où la carte de distances change de signe.

L'intersection de cette carte des distances avec l'image traitée est appelée isocontour 0, et c'est lui qui donne à la fin de l'évolution le contour des objets détectés dans cette image. Le contour actif est représenté par cette intersection.

La vitesse c est fonction de l'image. Par analogie, on dit qu'il forme un champ de force qui attire le contour actif dans le lieu des points formant un minimum local d'énergie.

Plus précisément, cette vitesse c est minimale à proximité d'un contour d'un objet de l'image, de sorte que le contour actif n'évolue plus lorsqu'il se trouve sur un de ces bords (c'est-à-dire qu'il l'a alors détecté). À l'inverse, le contour actif évolue lorsqu'il se trouve loin d'un tel contour.

Ce procédé présente un inconvénient majeur puisque, appliqué au problème de l'extraction d'empreintes au sol de structures humaines, il ne permet l'extraction que des contours extérieurs de ces empreintes.

Ce problème est partiellement résolu dans l'article en utilisant plusieurs amorces de contours actifs, l'une à l'extérieur de l'objet pour en extraire le contour extérieur, et l'une à l'intérieur pour en extraire le contour intérieur.

Autrement dit, une étape manuelle d'analyse de la scène est nécessaire afin d'obtenir une extraction optimale de l'objet.

Le but de l'invention est de s'affranchir de la nécessité de cette phase d'analyse, en proposant un procédé entièrement automatique permettant l'extraction des contours extérieurs et intérieurs d'une structure humaine dans un modèle numérique d'élévation.

Le procédé conforme à l'invention comporte les étapes consistant à :

- faire évoluer un ensemble de contours actifs obéissant à une loi d'évolution,
- stopper l'évolution des contours actifs lorsqu'ils remplissent une première condition d'arrêt afin de déterminer des premières positions,

- faire de nouveau évoluer ledit ensemble de contours actifs selon la loi d'évolution,
- stopper l'évolution desdits contours actifs lorsque ceux-ci remplissent une seconde condition d'arrêt, afin de déterminer des secondes positions.

Les empreintes au sol sont déterminées par ces premières et secondes positions.

Ainsi, le procédé de l'invention permet d'extraire les empreintes au sol d'objets contenus dans un modèle numérique d'élévation, indépendamment de leur nombre et de leur forme. Notamment, les objets présentant des concavités ou des évidements sont correctement extraits, contrairement à avec les solutions de l'état de l'art connues.

Les différents avantages et caractéristiques de l'invention apparaîtront de façon plus claire dans la description qui va suivre en référence aux figures annexées.

La figure 1 illustre l'enchaînement des différentes étapes du procédé selon l'invention.

Les figures 2a, 2b, 2c et 2d schématisent l'application du procédé de l'invention à un exemple imaginaire.

Le procédé selon l'invention consiste à utiliser un contour actif pour la détection d'objets, et notamment de structures humaines, dans un modèle numérique d'élévation.

Selon cette méthode, le modèle numérique d'élévation est considéré comme une image numérique dont la valeur de chaque pixel représente l'élévation du terrain à l'endroit correspondant à ce pixel.

Selon une première mise en oeuvre de l'invention, la vitesse c peut être de la forme : $c = \frac{k_1}{1+k_2 \cdot |\nabla I|}$. Le terme $\frac{1}{1+k_2 \cdot |\nabla I|}$ est appelé "terme d'attache aux données".

Dans cette équation, $|\nabla I|$ est le module du gradient de l'image I représentant le modèle numérique d'élévation traité, tandis que $k_1$ et $k_2$ sont deux paramètres.

L'image numérique I représente le modèle numérique d'élévation. La valeur de chaque pixel est égale à l'élévation du point correspondant dans le modèle numérique d'élévation. Le gradient $|\nabla I|$ peut être calculé par n'importe laquelle des nombreuses méthodes de l'état de l'art. Notamment, il peut être calculé par l'algorithme de Canny-Deriche, précédemment évoqué.

Le paramètre $k_1$ peut être assimilé à la vitesse de propagation du contour actif. Sa valeur peut être déterminée expérimentalement. Typiquement, $k_1$ est compris dans l'intervalle [-0.3; 0.3], et on peut préférentiellement choisir $k_1 = \pm 0.1$.

Le paramètre $k_2$ représente un degré d'attache aux données de l'image. Plus sa valeur est élevée, plus l'évolution du contour actif sera influencée par l'image I. Inversement, plus sa valeur est faible, plus le contour actif évoluera de façon autonome, indépendamment de l'image I. Là encore, la valeur adéquate peut être déterminée de façon expérimentale. Typiquement, cette valeur est choisie dans l'intervalle [0; 0.8], et on choisira préférentiellement $k_2 = 0.1$.

Selon une deuxième mise en oeuvre du procédé selon l'invention, la force c est déterminé par l'équation :

$$c = \frac{k_1}{1+k_2 \cdot |\nabla I|} + \frac{k_3 \cdot \mathrm{div}\left(\frac{\nabla u}{|\nabla u|}\right)}{1+k_2 \cdot |\nabla I|}$$

Ce deuxième terme qui apparaît à la suite du premier introduit dans la première mise en oeuvre est appelé terme de diffusion. Son rôle est de lisser le contour actif en pénalisant sa longueur de sorte que l'on tende, au fil de son évolution, vers un contour de longueur minimale. Ce terme peut être important dans la mesure où il facilite la modélisation de formes polyédriques. Il est particulièrement adapté pour l'extraction de structures humaines telles des bâtiments.

Le terme

$$\mathrm{div}\left(\frac{\nabla u}{|\nabla u|}\right),$$

dans lequel « div » note la divergence, représente la courbure du contour, et $k_3$ est un nouveau paramètre, que l'on choisit typiquement dans l'intervalle [0; 0.3] et dont la valeur adéquate est déterminée de façon expérimentale. Si l'on choisit $k_3 = 0$, on retrouve l'équation de la première mise en oeuvre explicitée précédemment.

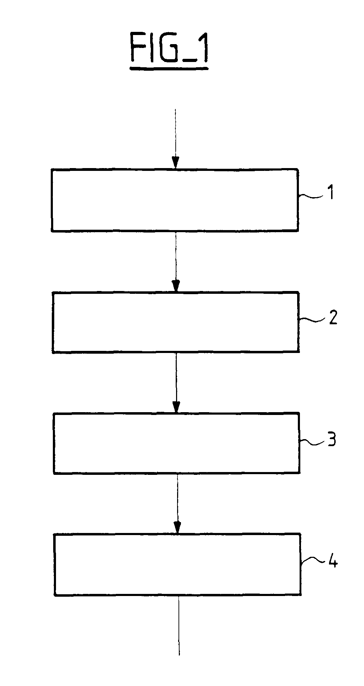

Sur la figure 1, l'étape référencée 1 consiste à procéder à une première évolution d'un ensemble de contours actifs, chacun d'entre eux obéissant à l'une des équations données. Cet ensemble peut éventuellement être réduit à un unique contour actif.

De façon indépendante les uns des autres, l'évolution des contours actifs cesse lorsqu'une première condition d'arrêt est atteinte.

Cette condition d'arrêt peut prendre plusieurs formes.

Elle peut par exemple être basée sur un calcul de la moyenne et du maximum de l'évolution du contour, sur l'ensemble des points du contour actif considéré. Autrement dit, on calcule pour chaque point son évolution entre deux itérations. On décide alors de l'arrêt ou non en fonction de deux tests : le premier test consiste à comparer la valeur moyenne des progressions de chaque point du contour actif à une première valeur seuil, et le second test consiste à comparer la valeur maximale des progressions à un second seuil.

Lorsque ces deux tests sont remplis, c'est-à-dire lorsque la moyenne et le maximum des progressions deviennent inférieurs aux seuils, alors la progression est arrêtée, et l'on mémorise (étape référencée 2 sur la figure 1) les positions du contour actif.

L'étape 3 consiste à relancer la progression du contour actif précédemment arrêté, à partir de sa position courante. L'évolution se fait de la même façon que pour l'étape référencée 1. Cette nouvelle progression est arrêtée lorsqu'une deuxième condition d'arrêt est remplie.

Cette deuxième condition d'arrêt peut par exemple être la même que la première.

L'étape 4 consiste à mémoriser la position du contour actif ainsi qu'il fut fait lors de l'étape 2.

Pour chaque contour actif, les deux positions mémorisées permettent de détecter les objets présents et les éventuels objets imbriqués dans le modèle numérique d'élévation.

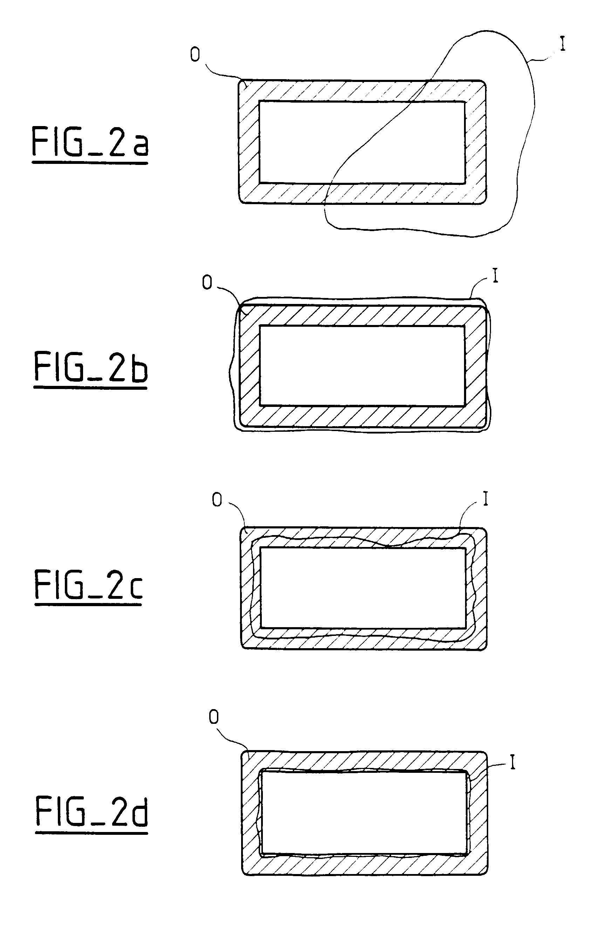

La figure 2 illustre l'application du procédé selon l'invention sur un exemple pratique. La référence O représente un objet à détecter par un contour actif dont on a figuré l'isocontour I.

La figure 2a représente l'état initial. L'isocontour I (ainsi que le contour actif dont il est la projection) possède un état initial quelconque.

La figure 2b représente l'état à l'étape 2. L'isocontour I "colle" alors aux contours extérieurs de l'objet O. Cette position est mémorisée.

La figure 2c représente l'état durant l'étape 3. L'isocontour a continué son évolution en dépassant sa première position d'arrêt.

La figure 2d représente l'état à l'étape 4. L'isocontour I "colle" cette fois-ci au contour intérieur et cette nouvelle position est mémorisée.

Les deux positions mémorisées (à l'étape 2 et à l'étape 4), le bâtiment O est détecté.

Les isocontours mémorisés lors des étapes 2 et 4 (figures 2b et 2c) représentent l'objet O tel que détecté par le procédé selon l'invention.

## Revendications

1.  Procédé d'extraction automatique d'empreintes au sol d'objets (O), notamment de structures humaines, au sein d'un modèle numérique d'élévation, caractérisé en ce qu'il comporte des étapes visant à :

    -   faire évoluer (1) un ensemble de contours actifs (I) obéissant à une loi d'évolution,
    -   stopper (2) l'évolution desdits contours actifs lorsque ceux-ci remplissent une première condition d'arrêt afin de déterminer des premières positions,
    -   faire de nouveau évoluer (3) ledit ensemble de contours actifs selon ladite loi d'évolution,
    -   stopper (4) l'évolution desdits contours actifs lorsque ceux-ci remplissent une seconde condition d'arrêt, afin de déterminer de secondes positions,

        lesdites empreintes au sol étant déterminées par lesdites premières et secondes positions.

2.  Procédé selon la revendication 1, dans lequel ladite loi d'évolution est déterminée par l'équation : $\frac{\partial u}{\partial t} = \frac{k_1 \cdot |\nabla u|}{1 + k_2 \cdot |\nabla I|}$, dans laquelle u représente la carte des distances associée à un desdits contours actifs, t représente les itérations, $|\nabla I|$ représente le gradient de l'image représentant ledit modèle numérique d'élévation, $|\nabla u|$ représente le gradient de ladite carte des distances, et $k_1$ et $k_2$ sont deux paramètres.

3.  Procédé selon la revendication précédente, dans lequel ladite loi d'évolution comporte en outre dans son second membre un terme de la forme :

$$\frac{k_3 \cdot \operatorname{div}\left(\frac{\nabla u}{|\nabla u|}\right)}{1 + k_2 \cdot |\nabla I|},$$

dans laquelle le terme

$$\operatorname{div}\left(\frac{\nabla u}{|\nabla u|}\right)$$

représente la courbure dudit contour actif, et $k_3$ un paramètre.

4.  Procédé selon l'une des revendications précédentes, caractérisé en ce que lesdites conditions d'arrêt sont basées sur un calcul de la moyenne et du maximum de l'évolution dudit contour actif sur l'ensemble des points dudit contour actif.

# FIG_1

FIG_2a

FIG_2b

FIG_2c

FIG_2d

Office européen
des brevets

**RAPPORT DE RECHERCHE EUROPEENNE**

Numéro de la demande

EP 00 40 1469

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | CASELLES V ET AL: "GEODESIC ACTIVE CONTROURS" PROCEEDINGS OF THE INTERNATIONAL CONFERENCE ON COMPUTER VISION,US,LOS ALAMITOS, IEEE COMP. SOC. PRESS, vol. CONF. 5, 20 juin 1995 (1995-06-20), page 694-699 XP000557432 ISBN: 0-7803-2925-2 * abrégé * * page 964, colonne 2, ligne 19 - ligne 29 * * page 696, colonne 1, ligne 43 - colonne 2, ligne 7 * --- | 1-3 | G06T5/00 |
| X | SIDDIQI K ET AL: "AREA AND LENGTH MINIMIZING FLOWS FOR SHAPE SEGMENTATION" IEEE TRANSACTIONS ON IMAGE PROCESSING,US,IEEE INC. NEW YORK, vol. 7, no. 3, mars 1998 (1998-03), page 433-443 XP000738216 ISSN: 1057-7149 * abrégé * * page 433, colonne 2, ligne 1 - ligne 3 * * page 440, colonne 1, ligne 1 - ligne 8 * ----- | 1,4 | DOMAINES TECHNIQUES RECHERCHES (Int.Cl.7) G06T |

Le présent rapport a été établi pour toutes les revendications

| Lieu de la recherche | Date d'achèvement de la recherche | Examinateur |
|---|---|---|
| BERLIN | 14 septembre 2000 | González Arias, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)